# NEUE EUROPÄISCHE PATENTSCHRIFT

(11) **EP 0 842 038 B2**
(45) Veröffentlichungstag und Bekanntmachung des Hinweises auf die Entscheidung über den Einspruch: **03.11.2004**
(45) Hinweis auf die Patenterteilung: 31.10.2001
(21) Anmeldenummer: 96928334.0
(22) Anmeldetag: 26.07.1996
(51) Int. Cl.: B29C 70/24, B29B 15/10

(54) **VERFAHREN ZUR HERSTELLUNG EINER ARMIERUNG FÜR THERMO- ODER DUROPLASTMATRIZEN**
METHOD OF PRODUCING A REINFORCEMENT FOR THERMOPLASTIC AND THERMOSETTING MATRICES
PROCEDE DE FABRICATION D'UNE ARMATURE POUR MATRICES THERMOPLASTIQUES ET THERMODURCISSABLES

(30) Priorität: 28.07.1995 DE 19527697
(43) Veröffentlichungstag der Anmeldung: 20.05.1998
(73) Patentinhaber: SAERTEX Wagener GmbH & Co. KG, 48369 Saerbeck (DE)
(72) Erfinder: WAGENER, Gert, D-48282 Emsdetten (DE)
(74) Vertreter: Habbel, Hans-Georg, Dipl.-Ing.
(86) Internationale Anmeldenummer: PCT/DE1996/001393
(87) Internationale Veröffentlichungsnummer: WO 1997/004946

(56) Entgegenhaltungen:
- EP-A- 0 296 970
- EP-A- 0 319 832
- EP-A- 0 361 796
- EP-A- 0 646 454
- EP-B- 0 842 038
- WO-A-93/01342
- DE-A- 2 312 816
- DE-A- 2 948 235
- DE-A- 3 535 272
- DE-A- 3 741 669
- DE-C- 3 535 272
- GB-A- 2 177 345
- US-A- 4 615 717
- COMPOSITES MANUFACTURING, Bd. 3, Nr. 4, 1.Januar 1992, Seiten 223-233, XP000363810 GIBSON A G ET AL: "IMPREGNATION TECHNOLOGY FOR THERMOPLASTIC MATRIX COMPOSITES"

## Beschreibung

Die Erfindung bezieht sich auf ein Verfahren zur Herstellung einer Armierung für Matrixsysteme gemäß dem Oberbegriff des Hauptanspruches.

Unter dem Begriff "Matrix" bzw. "Matrizen" versteht man Hüllmaterial, das einen anderen Stoff eingeschlossen hält.

.Es ist bekannt, Thermoplaste mit Gewebe oder Gelegen zu armieren, wenn definierte Festigkeiten - in bestimmten Beanspruchungsrichtungen verlangt werden. Als nachteilig wird bei dieser Verfahrensweise empfunden, daß eine nur geringe Verformbarkeit durch die endlos Armierungsfäden erreicht wird.

Es ist auch bekannt, Thermoplaste mit Wirrfaservliesen oder Matten zu armieren, wobei dann keine definierte Festigkeit erzielt wird, andererseits aber die Verformbarkeit wesentlich günstiger ist, so daß leichte Anpassungen an die unterschiedlichsten Formen erreicht werden können

Aus der gattungsbildenden EP-A-361 796 ist ein Verfahren bekannt, bei welchem die Armierung.aus einem Gelege aus miteinander vernähten Lagen gebildet wird, die aus festigkeitsgebenden Werkstoffen bestehen, wie Glasfasern, Carbonfasern oder anderen Werkstoffen, wobei diese festigkeitsgebenden Werkstoffe in Endlosform als Fäden vorliegen.

Der Erfindung liegt die Aufgahe zugrunde, ein Verfahren zur Armierung von Thermo- oder Duroplastmatrizen zu schaffen, die eine hohe Festigkeit in bestimmten Beanspruchungsrichtungen aufweisen, andererseits aber leicht durch Formgebung an vorgegebene Formen angepaßt werden können.

Diese der Erfindung zugrundeliegende Aufgabe wird durch die Lehre des Hauptanspruches gelöst.

Vorteilhafte Ausgestaltungen sind in den Unteransprüchen erläutert.

Mit anderen Worten ausgedrückt wird ein Verfahren zur Armierung von Matrixsystemen geschaffen, wobei zur Armierung Glasfasern als Fäden oder Rowings, Carbonfasem oder andere festigkeitsgebende Werkstoffe eingesetzt werden, wobei ein Gelege aus festigkeitsgebenden Werkstoffen aus Endlosfasem einem Vernadelungsprozeß unterworfen wird. Durch diesen Vernadelungsprozeß wird der durchgehende Endlosfaserverbund aufgelöst, und zwar so, daß zwar die gewollte Orientierung zur Erzielung der definierbaren Festigkeit beibehalten wird, die Endlosfäden jedoch durch den Vernadelungsprozeß unterbrochen und damit die Formbarkeit oder Drapierbarkeit des Produktes wesentlich verbessert wird.

Außerdem werden durch den Vemadelungsprozeß Faserteile aus dem vorgegebenen Verbund gelöst und in die vertikale Z-Richtung gebracht und sorgen hier für zusätzliche Festigkeit in der Z-Richtung.

Gemäß der Erfindung kann dabei so vorgegangen werden, daß dem Gelege aus festigkeitsgebenden Werkstoffen Thermo- oder Duroplastmaterial zugegeben wird, und zwar entweder vor oder nach dem Vernadelungsvorgang.

Hierbei kann das Thermo- oder Duroplastmaterial in Form von Fäden, Fasern oder Vliesen, aber auch als Folien und als Pulver oder Granulat zugegeben werden.

Das Gelege aus festigkeitsgebenden Werkstoffen kann in der 0-Grad-Richtung verlaufen, in der 90°-Richtung verlaufen oder auch in 0°- und 90° -Richtung gelegt werden. Hierbei ist es weiterhin möglich, das Gelege in der + oder -45°-Richtung oder in der 0° und +/- 45° Richtung auszurichten.

Schließlich ist es auch möglich, ein Gelege aus 0°, 90°, -45° und +45° einzusetzen.

Unter Anpassung an die jeweilig gewünschten Festigkeitserfordernisse kann aber auch das Gelege jede beliebige andere Richtung aufweisen.

Das gemäß den Vorschlägen der vorliegenden Anmeldung ausgerichtete Matrixsystem schließt eine Lücke im Bereich der bestehenden Armierungsmöglichkeiten für sogenannte Composites mit Thermoplasten und kann auch für andere Matrixsysteme, z. B. mit Duroplast, eingesetzt werden.

## Patentansprüche

1. Verfahren zur Herstellung einer Armierung für Matrixsysteme mittels eines Geleges aus miteinander vernähten Lagen aus Glasfasem, Carbonfasern oder anderen festigkeitsgebenden Werkstoffen, **dadurch gekennzeichnet, daß** ein Gelege aus festigkeitsgebenden Werkstoffen in Endlosform einem Vernadelungsprozeß unterworfen wird.

2. Verfahren nach Anspruch 1, **dadurch gekennzeichnet, daß** dem Gelege aus festigkeitsgebenden Werkstoffen Thermo- oder Duroplastmaterial zugegeben wird.

3. Verfahren nach Anspruch 1 oder 2, **dadurch gekennzeichnet, daß** das Thermo- oder Duroplastmaterial in Form von Fäden, Fasern oder Vliesen eingesetzt wird.

4. Verfahren nach Anspruch 1 oder 2, **dadurch gekennzeichnet, daß** das Thermo- oder Duroplastmaterial in Form von Pulver bzw. Granulat zugegeben wird.

5. Verfahren nach Anspruch 1 oder 2, **dadurch gekennzeichnet, daß** das Thermo- oder Duroplastmaterial in Form von Folien zugegeben wird.

6. Verfahren nach einem der vorhergehenden Ansprüche, **dadurch gekennzeichnet, daß** das Thermooder Duroplastmaterial vor der Vemadelung den Strands aus festigkeitsgebenden Werkstoffen zugesetzt wird.

7. Verfahren nach einem der vorhergehenden Ansprüche 1 bis 5, **dadurch gekennzeichnet, daß** das Thermo- oder Duroplastmaterial nach der Vernadelung den festigkeitsgebenden Werkstoffen zugesetzt wird.

8. Verfahren nach einem dervorhergehenden Ansprüche, **dadurch gekennzeichnet, daß** das Gelege aus festigkeitsgebenden Werkstoffen hinsichtlich der Richtung des Filamentmaterials den Festigkeitsforderungen angepaßt ist.

## Claims

1. Method of producing a reinforcement for matrix systems by means of a layer composed of glass fibre layers, carbon fibres or other reinforcing materials sewn with one another, **characterised in that** a layer of reinforcing materials is in a continuous form subjected to a stitching process.

2. Method according to Claim 1, **characterised in that** thermoplastic or duroplastic material is added to the layer of reinforcing materials.

3. Method according to Claim 1 or 2, **characterised in that** the thermoplastic or duroplastic material is applied in the form of threads, fibres or fleece.

4. Method according to Claim 1 or 2, **characterised in that** the thermoplastic or duroplastic material is added in the form of a powder or granulate.

5. Method according to Claim 1 or 2, **characterised in that** the thermoplastic or duroplastic material is added in the form of foils.

6. Method according to one of the above claims, **characterised in that** the thermoplastic or duroplastic material is added to the strand of reinforcing materials prior to stitching.

7. Method according to one of the above Claims 1 to 5, **characterised in that** the thermoplastic or duroplastic material is added to the reinforcing materials after stitching.

8. Method according to one of the above claims, **characterised in that** the layer of reinforcing materials is matched to strength requirements as regards orientation of the filament material.

## Revendications

1. Procédé de fabrication d'une armeture pour systèmes matriciels au moyen d'une grille composée de couches de fibres en verre, fibres de carbone ou d'autres matières conférant de la résistance cousues entre eux, **caractérisé en ce qu'**une grille composée d'une matière conférant de la résistance sous forme continue est soumise à un processus d'aiguilletage.

2. Procédé selon la revendication 1, **caractérisé en ce que** la grille composée d'une matière conférant de la résistance est ajoutée au matériau thermoplastique ou thermodurcissable.

3. Procédé selon la revendication 1 ou 2, **caractérisé en ce que** le matériau thermoplastique ou thermodurcissable est mis en oeuvre sous forme de fils, fibres ou mon-tissés.

4. Procédé selon la revendication 1 ou 2, **caractérisé en ce que** le matériau thermoplastique ou thermodurcissable est ajouté sous forme de poudre ou de granulé.

5. Procédé selon la revendication 1 ou 2, **caractérisé en ce que** le matériau thermoplastique ou thermodurcissable est ajouté sous forme de feuilles.

6. Procédé selon l'une quelconque des revendications précédentes, **caractérisé en ce que** le matériau thermoplastique ou thermodurcissable est additionné avant l'aiguilletage de la surface composée de matériau conférant de la résistance.

7. Procédé selon l'une quelconque des revendications précédentes 1 à 5, **caractérisé en ce que** le matériau thermoplastique ou thermodurcissable est additionné, après l'aiguilletage, aux matériaux conférant de la résistance.

8. Procédé selon l'une quelconque des revendications précédentes, **caractérisé en ce que** l'on adapte la grille composée d'un matériau conférant de la résistance, en ce qui concerne la direction des filaments, aux contraintes de résistance.
